# EUROPEAN PATENT APPLICATION

(11) **EP 4 825 337 A2**
(43) Date of publication of application: **21.10.2026**
(21) Application number: 26202801.2
(22) Date of filing: 22.08.2023
(51) Int. Cl.: A61C 13/00

(54) **A METHOD FOR PREPARING A DENTAL PROSTHESIS**

(30) Priority: 23.08.2022 EP 22191651; 08.03.2023 EP 23160650
(62) Document number(s) of the earlier application(s) in accordance with Art. 76 EPC: 23758339.8 / 4 577 148
(71) Applicant: Institut Straumann AG, 4052 Basel (CH)
(72) Inventor: Martin Villarejo, Boris, 4106 Therwil (CH); Zettler, Marc, 4125 Riehen (CH)
(74) Representative: Schaad, Balass, Menzl & Partner AG

(57) **Abstract**

A scannable member for determining a position of a dental implant is disclosed. The scannable member comprises a body and a base, the base being configured to mate with an implant receptacle of an abutment for fixing a dental prosthesis to a dental implant.

## Description

### A METHOD FOR PREPARING A DENTAL PROSTHESIS AND A SCANNABLE MEMBER

The present disclosure pertains to the field of restorative dentistry. The present disclosure relates to a method for preparing a dental prosthesis and a related scannable member.

### BACKGROUND

Edentulism or toothlessness is a worldwide public health issue. Edentulism can occur because of biologic disease processes, such as dental caries/cavities, periodontal diseases, trauma, and oral cancer. Edentulism is accompanied by several comorbidities that can significantly influence an individual. As the anticipated life expectancy increases, it will likely continue to have high prevalence in the future. Complete-arch implant prostheses have been widely used in restorative dentistry to restore the smile of an edentulous and/or semi-edentulous patient.

Digital technology has been introduced in restorative dentistry to provide accurate digital implant impressions. During fixed implant rehabilitation and prior to fabrication of a prosthesis prototype, complete-arch impressions using digital scanning may be performed. Namely, a plurality of intraoral scans can be performed to determine three-dimensional implant positions and contours of a first dental prosthesis. However, a superimposition of the plurality of data sets generated by the plurality of scans to generate a model of the first dental prosthesis provides a major challenge. This has been attributed to an absence of stable intraoral landmarks when performing the scans. Certain techniques have been described in an effort to overcome this obstacle including the use of self-adhesive fiducial markers, scanposts and/or surgical anchorage pins.

However, the suggested techniques are tedious and laborious. They require a large number of intraoral scans and intervention on the patient, as the fiducial markers and/or surgical pins needs to be placed, then a plurality of scans need to be performed to obtain a good digital image of the patient's mouth, and finally the fiducial markers and/or surgical pins need to be removed and the first dental prosthesis inserted. Self-adhesive fiducial markers are just placed onto the soft tissue not anchored; therefore, they might move between scans rendering the image not readily useable/accurate, obliging the dentist to redo scans, and increasing the time the patient has to spend on the dentist chair. Surgical pins, due to their reflective surface, are less recognizable by the scanner, thus increasing the number of scans needed to acquire a useable image. This is both time consuming and unpleasant for the edentulous and/or semi-edentulous patient.

Other methods for performing intraoral scans to generate a model of an edentulous patient's jaws are also known. For example, Marini et al. (J. Prosthodontics, 2021, 0, 1) describes a method wherein a scanbody comprising a long scannable screw mounted on a scanpost configured to receive said screw is used for performing a first soft tissue scan. Once the first scan is complete, the long scannable screw and the scanpost are removed. Then, a temporary abutment is installed, and the interim denture is then mounted and secured on the temporary abutments with the long scannable screws, and a second scan is performed with the interim denture. After the second scan has been performed, the scannable screw is removed and replaced with a regular prosthetic screw before the patient can leave with the interim prosthesis. Every removal and insertion of devices, such as of the scanbody, the temporary abutment, and the prosthetic screw requires intraoral intervention on the patient which can be time consuming, unpleasant for the patient, and which may damage the surface of the patient's soft tissue which is yet not healed, requiring longer healing time before providing the second dental prosthesis.

WO 2022/135979 A1 further discloses an apparatus for digitally scanning dental prosthetic implants, including a plurality of scanbodies, each surrounded by a thread ring; each thread ring engages a portion of a linking thread; each scanbody is associable with a prosthesis or with the oral cavity. The scanning method includes the steps of: removing the prosthesis from the oral cavity, associating the scanbodies with the prosthesis outside the oral cavity, associating the scanbodies with one another by means of the thread rings and the linking thread, performing a digital scan of the entire unit outside the oral cavity or screwing the scanbodies to each implant inserted in the bone, associating the scanbodies with one another by means of the thread rings and the linking thread, performing a scan in the oral cavity. The scanning method requires scanbodies to be attached to each implant inserted into the bone of the patient. Since every removal and insertion of devices, such as of the scanbodies, the prosthesis, and prosthetic screws requires intraoral intervention on the patient, this method can thus be time consuming, unpleasant for the patient, and may cause damage to the surface of the patient's soft tissue which is not yet healed.

Accordingly, there is a need for methods and devices for preparing a dental prosthesis, which may mitigate, alleviate, or address the existing shortcomings, such as to provide a less time consuming and more accurate method for preparing a dental prosthesis while increasing the comfort for the patient and reducing the time the patient spends on the dental chair.

A method is disclosed, for preparing a dental prosthesis. The method comprises obtaining a first set of data representing a first dental prosthesis arranged on a set of dental implants. The method comprises obtaining a second set of data representing the first dental prosthesis comprising one or more scannable members arranged on a proximal surface of the first dental prosthesis. The method comprises generating, based on the first set of data and the second set of data, a model of a second dental prosthesis.

A scannable member for determining a position of a dental implant is disclosed, the scannable member comprising a body and a base, the base being configured to mate with an implant receptacle of an abutment for fixing a dental prosthesis to a dental implant.

It is an advantage of the present disclosure that the accuracy and speed of the scanning method can be increased, the number of steps needed to design the final prosthesis are reduced, while the chair time for the patient is reduced. By obtaining the first data set solely on the first dental prosthesis on the dental implant without using any scannable members arranged on the dental prosthesis and then removing the dental prosthesis from the dental implant and obtaining the second set of data on the first dental prosthesis having one or more scannable members arranged on the proximal surface of the first dental prosthesis, any attachments of scannable members and obtainment of data related to the scannable members can be performed without a patient being required to sit in the chair. By arranging the scannable members on the proximal surface of the dental implant, such as on an implant receptacle of an abutment for securing the dental prosthesis to the dental implant, the scannable members are arranged in the location and the direction of the dental implants, and the second set of data can give a correct representation of the geographical coordinates of the dental implants and provides angular information on the dental implants. Said information and coordinates can be used for creating a model of the first dental prosthesis, and ultimately a model of the final prosthesis. Thereby, additional fiducial markers, scanposts and/or surgical anchorage pins are no longer required and the patient's soft tissue is less stressed thus providing a faster healing of the soft tissue. This can reduce the number of intraoral interventions required for preparing the dental prosthesis.

Furthermore, a scanner used for performing the scans, such as a scanning device, can sometimes have issues scanning the soft tissue while scanning an edentulous and/or semi-edentulous patient and errors in stitching of the images can occur during the scanning. The current disclosure can overcome this issue since the scanner can be guided by a morphology of the teeth of the first dental prosthesis, and therefore can stitch the images faster with a higher accuracy and with less deviation. Since the scanner can be guided by the morphology of the teeth, the second set of data comprising the scan members arranged on the proximal surface of the dental prosthesis can be obtained chairside, such as outside of the patient. The first set of data and the second set of data can then be superimposed to create an accurate representation of the morphology of the mouth of the patient, the position of the dental implants and the morphology of the dental prosthesis with minimum patient interaction. Accordingly, additional scans and/or additional post-processing of the scanned images can thus be reduced or may no longer be required, which further reduces the time required to prepare a model of the first dental prosthesis and therefore the time to prepare the final dental prosthesis.

In addition, using the first dental prosthesis for generating the model allows for a better preparation and adaptation of the second dental prosthesis. The first dental prosthesis can be used to evaluate aesthetics and phonetics of the dental prosthesis. In cases where the first dental prosthesis does not adapt well to the tissue of the patient, or the aesthetic or occlusal modifications needed are minor, they can be addressed chairside, such as extraorally, directly on the first dental prosthesis, and the modified first dental prosthesis can then be rescanned as a reference for fabrication of the second dental prosthesis. The time efficiency of the method can be financially beneficial for all parties involved (such as the patient, the dentist, the dental clinician, and clinical lab).

### BRIEF DESCRIPTION OF THE DRAWINGS

The above and other features and advantages of the present disclosure will become readily apparent to those skilled in the art by the following detailed description of the examples thereof with reference to the attached drawings, in which:
Fig. 1 is a flow-chart illustrating an example method preparing a dental prosthesis according to this disclosure,
Figs. 2A-2C illustrate an example method for obtaining a second data set according to one or more example methods according to this disclosure,
Figs. 3A-3B illustrate example scannable members according to one or more second examples according to this disclosure,
Fig. 4 illustrates an example scannable member according to one or more examples according to this disclosure,
Figs. 5A-5B illustrate a scannable member being configured to be clipped onto the abutment according to one or more examples of this disclosure,
Fig. 6 illustrates a body of a scannable member being configured to be releasably secured to a base of a scannable member according to one or more examples of this disclosure,
Figs. 7A-7C illustrate a scannable member according to one or more examples of this disclosure,
Figs. 8A-8C illustrate a scannable member according to one or more examples of this disclosure,
Fig. 9 is a block diagram illustrating an example scanner according to this disclosure, and
Fig. 10 is a block diagram illustrating an example computer-controlled manufacturing tool according to this disclosure.

### DETAILED DESCRIPTION

Various examples and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the examples. They are not intended as an exhaustive description of the disclosure or as a limitation on the scope of the disclosure. In addition, an illustrated example does not need to have all the aspects or advantages shown. An aspect or an advantage described in conjunction with a particular example is not necessarily limited to that example and can be practiced in any other examples even if not so illustrated, or if not so explicitly described.

The current disclosure provides a method which improves the quality of the model and the patient's comfort during the process. A method for preparing a dental prosthesis is disclosed. The method may be performed by a dental prosthesis manufacturing system. The dental prosthesis manufacturing system may comprise a scanner, such as an intraoral scanner, and a computer-controlled manufacturing tool, such as a 3D-printer, a lathing machine and/or a casting machine. The scanner may comprise a memory circuitry, processor circuitry, imaging circuitry and an interface. The computer-controlled manufacturing tool may comprise a memory circuitry, processor circuitry, and an interface. The method comprises obtaining a first set of data representing a first dental prosthesis arranged on a set of dental implants. The first dental prosthesis may be an interim prosthesis. An interim prosthesis can be seen as the prosthesis being a temporary prosthesis configured to be arranged on the dental implant for only a limited period of time, such as until a second dental prosthesis has been produced. A dental implant is a medical device that is surgically implanted into the jaw of an edentulous and/or semi-edentulous person, to restore the person's ability to chew or their appearance. An edentulous person can herein be seen as a person missing all teeth, a semi-edentulous person can herein be seen as a person missing one or more teeth. The dental implant provides support for artificial teeth, such as prosthesis, crowns, bridges, and/or dentures.

In one or more example methods, the first set of data may be obtained from the scanner. In one or more example methods, obtaining the first set of data may comprise scanning, using the scanner, the first dental prosthesis arranged on the set of dental implants. In one or more example methods, scanning may comprise scanning one or more of a facial surface of the first dental prosthesis, a lingual surface of the first dental prosthesis, an occlusal surface of the first surface and a jaw of the edentulous person. The first set of data may comprise information related to the first dental prosthesis that may be provided to a computer aided design (CAD) and/or computer aided manufacturing (CAM) software. Scanning the first dental prosthesis may comprise performing a first scan of the first dental prosthesis. In one or more example methods, the first scan is an intraoral scan such as a scan performed in the mouth of the patient. The first scan may be a three-dimensional (3D) scan. The first data set may be indicative of one or more of dental prosthesis reference coordinates, such as reference coordinates for one or more teeth of the first dental prosthesis, and a morphology of a jawbone of the edentulous and/or semi-edentulous patient, such as a morphology of a maxillary and/or a mandibular bone of the edentulous and/or semi-edentulous patient, and, if possible, a soft tissue of the edentulous and/or semi-edentulous patient.

In one or more example methods, the first dental prosthesis may comprise a set of abutments, such as a set of temporary abutments and/or final abutments, for securing the first dental prosthesis to the set of dental implants. An abutment herein is a piece, such as a connector, that is configured for securing a dental prosthesis to a set of dental implants, such as to one or more dental implants. An abutment may be arranged between and secure the dental prosthesis and a dental implant. The abutment may comprise an implant receptacle for receiving the dental implant and/or a prosthesis receptacle for receiving the dental prosthesis. The implant receptacle and the prosthesis receptacle may be arranged on opposite ends, such as on opposite longitudinal ends, of the abutment. A temporary abutment can be seen as an abutment configured to secure the first dental prosthesis to a dental implant. Temporary can be seen as the abutment being configured to secure the first prosthesis to the dental implant for only a limited period of time, until a second prosthesis is ready to be mounted to the patient's jaw. In other words, the temporary abutment is not configured to be permanently secured to the dental implant. The temporary abutment may be configured to stay in the edentulous and/or semi-edentulous patient's mouth when the first dental prosthesis is in place. Each abutment of the set of abutments may be attached to or embedded into the first dental prosthesis, such as by cementing or gluing (e.g., using temporary cement, or temporary glue) the abutment to the first dental prosthesis. Each abutment of the set of abutments may be arranged to protrude from a proximal surface of the first dental prosthesis to a distal surface of the first dental prosthesis. The proximal surface of the first dental prosthesis can herein be seen as a surface of the dental prosthesis configured to face a gum and/or a jaw of an edentulous and/or semi-edentulous patient. The distal surface of the first dental prosthesis can herein be seen as a surface of the dental prosthesis configured to face away from the gum and/or the jaw of an edentulous and/or semi-edentulous patient to which the dental prosthesis is configured to be attached to. In one or more example methods, each abutment of the set of abutments may comprise an implant receptacle for receiving a respective dental implant of the set of dental implants. The implant receptacle of the abutment may be configured to mate with the dental implant and to secure the dental prosthesis into which the abutment is embedded. An abutment is a connector piece between a dental implant and an artificial tooth, such as a crown, a dental bridge, or a denture. The abutment links the artificial tooth to the implant and thus comprises an implant receptacle on a first end of the abutment and a tooth receptacle, such as a denture receptacle, on the second end of the abutment. Typically, the scannable members are configured to be mounted to the denture receptacle of the abutment to allow a scanning of the denture while the denture is mounted to the implant via the implant receptacle of the abutment. The set of abutments can comprise one or more abutments.

The first dental prosthesis may be an interim prosthesis. The first dental prosthesis may also be an existing prosthesis which need to be repaired, replaced (e.g., due to wearing off), or adjusted (e.g., change from a removable prosthesis to a permanently fixed prosthesis).

An interim prosthesis can be seen as a temporary prosthesis configured to be arranged on the dental implant for only a limited period of time, such as until a second dental prosthesis, such as a final prosthesis, has been produced. The dental prosthesis is a dental appliance that replaces one or more missing teeth or covers up tooth defects. In other words, the dental prosthesis may be a replacement set of teeth. The first dental prosthesis, such as an interim prosthesis, can be used temporarily by the patient until a final, such as a permanent, prosthesis providing a better fit and increased comfort than the interim prosthesis has been produced. The first dental prosthesis, such as an interim prosthesis, is configured to be worn for a limited time, such as for bridging the gap from removal of the patient's actual teeth until finalization of the second dental prosthesis, such as of the final prosthesis. The final prosthesis has a better durability and is configured to be worn for several years. The first dental prosthesis and/or the second dental prosthesis may be one or more of an implant, a crown, a bridge, and a denture.

The first dental prosthesis may be arranged on the set of dental implants by means of the set of abutments. The implant receptacle of each abutment may be arranged onto a respective dental implant. Each of the abutments may be configured to be secured to the respective dental implant by being configured to receive a screw. The abutment may, for example, comprise a through-going hole (such as a lumen) for receiving the screw. The screw may be a prosthetic screw configured to secure the first dental prosthesis to the dental implant without interfering with the patient wearing the first dental prosthesis. The prosthetic screw may be configured to be fully contained within the abutments, such that the prosthetic screw does not protrude outside the abutment when the abutment is secured to the dental implant using the screw.

The method comprises obtaining a second set of data representing the first dental prosthesis comprising one or more scannable members arranged on a proximal surface of the first dental prosthesis. The one or more scannable members may be arranged on the implant receptacle of the respective abutment. By obtaining the second set of data representing the one or more scannable members arranged on the implant receptacle of the respective abutment, the scannable members may be indicative of spatial data of the set of dental implants to which the dental prosthesis is configured to be mounted. The spatial data can herein be seen as any type of data that directly or indirectly references a specific location of parts of the dental prosthesis in relation to other parts. In one or more example methods, the spatial data comprises data referencing a position of the implants vis a vis each other, the angles of the different implants and implant channels (such as a screw channel of the implant), vis a vis each other, and data mapping the soft tissue of the edentulous and/or semi-edentulous patient.

In one or more example methods, the method comprises removing the first dental prosthesis from the set of dental implants, such as from the mouth of the patient.

In one or more example methods, obtaining the second set of data comprises arranging a plurality of scannable members on the proximal surface of the first dental prosthesis. In one or more example methods, arranging the plurality of scannable members on the proximal surface comprises arranging each of the plurality of scannable members on the implant receptacle of a respective abutment. In one or more examples, the scannable member may comprise a first mating surface configured to mate with the implant receptacle of the abutment. Contrary to known scannable members that are configured to be mounted to a denture receptacle of the abutment, the scannable member according to the current disclosure is configured to mate with the implant receptacle of the abutment, thereby allowing the scannable member to be mounted to a proximal end of the abutment, such as to an implant receptacle of the abutment. This allows the scannable member to be arranged on the side of the denture configured to face the implant and/or the gum and/or the jaw of an edentulous and/or semi-edentulous patient. By configuring the scannable member to mate with the implant receptacle of the abutment, the scannable member can be mounted to the side of the denture configured to face the implant and thus used to indicate a position and alignment of the one or more implant(s) during an obtaining of a second set of data representing the first dental prosthesis according to the current disclosure. This may simplify an alignment of a first set of data with the second set of data for creation of a model of the second dental prosthesis. The first mating surface may be a flat surface or may comprise a first thread, such as an inner or outer thread, configured to thread into a corresponding second thread in or on the implant receptacle of the abutment. The second mating surface may be the second thread. In one or more example methods, the first mating surface and the second mating surface are flat surfaces. The scannable member may in one or more examples be hollow and may comprise an inner thread configured to receive a screw being inserted through a screw channel of the abutment.

In one or more example methods each of the scannable members may be arranged onto the respective abutment of the plurality of abutments by clipping the scannable member onto the abutment, such as to the implant receptacle of the abutment.

In one or more example methods, obtaining the second set of data comprises scanning the first dental prosthesis with the plurality of scannable members. In one or more example methods, scanning comprises scanning one or more of a facial surface of the first dental prosthesis, a lingual surface of the first dental prosthesis, the proximal surface of the first dental prosthesis, and the scannable members. In one or more example methods, the second set of data can be obtained using the scanner, such as the scanning device. The scanner may be configured to obtain, for example using the imaging circuitry and/or the memory circuitry, the second set of data indicative of the first dental prosthesis arranged on the plurality of abutments comprising the respective scannable member.

The second set of data may comprise data indicative of the plurality of scannable members, such as a set of data points indicative of the plurality of scannable members, to obtain implant reference coordinates and/or a landscape of the first dental prosthesis, thus providing an accurate model for the second dental prosthesis. The second data set may be indicative of the one or more dental implant reference coordinates and a morphology of the first dental prosthesis, such as a morphology of a maxillary and/or a mandibular dental prosthesis. By arranging the plurality of scannable members onto the implant receptacle of a respective abutment of the set of abutments the scannable members will be arranged in the position and extend in the direction of the dental implants to which the first dental implant is configured to be arranged. Hence, the second set of data may be indicative of reference coordinates for the one or more dental implants to which the first dental prosthesis and/or the second dental prosthesis are configured to be arranged. In addition, all data points collected will help design the final prothesis and erase any misalignment or issues noted while scanning the temporary denture, to provide a high quality final prothesis to the patient, without requiring an additional intra oral or extra oral scan. The second set of data can be obtained using the scanner, such as the scanning device. The scanner may be configured to obtain, for example using the imaging circuitry and/or the memory circuitry, the second set of data indicative of the first dental prosthesis comprising the one or more scannable members arranged on the proximal surface of the first dental prosthesis, such as arranged on the implant receptacle of the set of abutments of the first dental prosthesis.

The method comprises generating, based on the first set of data and the second set of data, a model, such as a digital model, of a second dental prosthesis, such as the final prosthesis. In one or more example methods, generating the model comprises aligning the first set of data with the second set of data. In one or more example methods, aligning comprises identifying one or more reference areas of a facial surface and/or a lingual surface of the first dental prosthesis in the first data set and the second data set. The reference area may be one or more of an area of a tooth of the dental prosthesis, an outline of one or more teeth of the dental prosthesis, an area between two teeth of the dental prosthesis, and the soft tissue around one or more teeth. In one or more example methods, aligning comprises aligning the one or more identified reference areas in the first data set with the one or more identified reference areas in the second data set. In one or more example methods, aligning comprises identifying one or more reference areas of a facial surface and/or a lingual surface of the first dental prosthesis in the first data set and aligning it with the corresponding one or more reference areas of the second data set. For example, the reference area of the second data set may be one or more of an area of a tooth of the dental prosthesis, an outline of one or more teeth of the dental prosthesis, an area comprising one or more scanbody fixed to the dental prosthesis, and an area of the soft tissue present on the dental prosthesis.

In one or more example methods, the model of the final prosthesis may be generated using a computer aided design (CAD) software. The CAD software may be embodied in the form of executable logic routines (for example, lines of code, software programs, etc.) that are stored on a non-transitory computer readable medium (for example, the memory circuitry of the scanner) and are executed by the processor circuitry of the scanner. In one or more example methods, generating the model comprises identifying one or more reference areas of a facial surface and/or a lingual surface of the first dental prosthesis in the first data set and the second data set. In one or more example methods, generating the model comprises aligning the one or more identified reference areas in the first data set with the one or more identified reference areas in the second data set. In other words, generating the model may comprise superimposing the corresponding reference areas from the first data set and the second data set. The model of the final prosthesis may comprise information required for producing a high accuracy dental prosthesis specifically adapted to the intraoral morphology of the edentulous and/or semi-edentulous patient, such as information about the position of the dental implants and/or the first dental prosthesis, such as the interim prosthesis, and if possible, information concerning a soft tissue of the edentulous and/or semi-edentulous patient. Thereby, a final prosthesis with an accurate fit with regards to the patient's intraoral morphology may be provided (and subsequently attached to the dental implant) without having to perform a plurality of try-ins to test and adapt the fit of the dental prosthesis. The risk of the dental prosthesis having to be remade, for example due to poor fitment, can thus be reduced. Furthermore, the wearing comfort for the edentulous and/or semi-edentulous patient may be increased since the fit of the dental prosthesis can be more accurate. In one or more example methods, the scanner may be configured to generate the model of the second dental prosthesis, such as may be configured to execute the CAD software, for example using the processor circuitry, for generating the final model, based on the first set of data and/or the second data set. In one or more example methods, the scanner is configured to superimpose the corresponding one or more reference areas of the facial surface and/or the lingual surface of the first dental prosthesis in the first data set and the second data set to align the first set of data with the second set of data.

In one or more example methods, the method comprises producing, based on the generated model of the second dental prosthesis, the second dental prosthesis. The second dental prosthesis may be produced by one or more techniques known to the skilled person in the art, such as milling, casting, additive manufacturing, such as 3D-printing, lathing, and casting. In one or more example methods, producing the second dental prosthesis comprises sending, for example via the interface of the scanner, manufacturing instructions for manufacturing the second dental prosthesis to a computer-controlled manufacturing tool, such as a 3D-printer, a lathing machine and/or a casting machine. The manufacturing instructions may comprise data indicative of the model of the second dental prosthesis. The computer-controlled manufacturing tool may be configured to receive, for example via the interface of the computer-controlled manufacturing tool, the manufacturing data from the scanner, and to store, for example in the memory circuitry of the computer-controlled manufacturing tool, the manufacturing instructions. The computer-controlled manufacturing tool may in one or more example methods, be configured to execute, for example by the processor circuitry of the computer-controlled manufacturing tool, the manufacturing instructions for producing, such as manufacturing, the second dental prosthesis.

A scannable member for determining a position of a dental implant is disclosed. The scannable member comprises a body and a base, the base being configured to mate with an abutment, such as to an implant receptacle of the abutment, for fixing a dental prosthesis to a dental implant. The implant receptacle of the abutment may be configured to mate with the dental implant and to secure the dental prosthesis into which the abutment is embedded.

The scannable member, such as the body and/or the base of the scannable member respectively, may comprise a top surface, a base surface, and a lateral surface. The lateral surface may connect the top surface and the base surface. The base surface may be a bottom surface, such as a surface facing the dental implant when the scannable member is arranged to the dental prosthesis via the abutment. The top surface may be a surface facing away from the dental prosthesis when the scannable member is arranged to the dental prosthesis via the abutment.

In one or more example scannable members, the base of the scannable member is releasably connected to the body of the scannable member. In one or more example scannable members, the base is configured to clip onto the body of the scannable member. Thereby, a plurality of bases and/or bodies can be combined to create different scannable members representing the dental implant used. In one or more example scannable members, the base has a first end having a conical shape. This may, for example, be the case when a mating surface of the dental implant has a conical shape.

In one or more example scannable members, the body of the scannable member may comprise a first protrusion, which may also be referred to as a clipping protrusion, such as a base clipping protrusion or base connection protrusion, configured to engage with the base of the scannable member. The first protrusion may be configured to be inserted into a cavity, such as into a throughgoing hole in the base of the scannable member. The first protrusion may be arranged on the base of the scannable member and may extend in a longitudinal and/or radial direction of an end surface of the body of the scannable member. The first protrusion may be hollow or solid. The size and shape of the first protrusion may be chosen such that the first protrusion is supported, such as radially supported, by one or more sidewalls of the throughgoing hole of the base of the scannable member. The first protrusion may, for example, have an outer diameter being equal to the inner diameter of the throughgoing hole of the base of the scannable member. In one or more example scannable members, the protrusion may be arranged on the base of the scannable member and the cavity may be arranged on the body of the scannable member. In one or more example scannable members, the base may comprise a groove, such as a body clipping groove or body connecting groove, for receiving the base clipping protrusion. By inserting the body into the base until the base clipping protrusion engages the body clipping groove, the body may be releasably connected to the base. In one or more example scannable members, the base of the scannable member may comprise an insert arranged inside the base, and/or within the base, and/or on an inner surface of the base. The matrix may be configured to engage with the body of the scannable member. The insert may be a matrix, such as a matrix made of polymer. The matrix may comprise the groove for receiving the first protrusion, such as the base clipping protrusion, of the body. The base clipping protrusion may be hollow or solid. The size and shape of the base clipping protrusion may be chosen such that the base clipping protrusion is supported, by one or more sidewalls of the base. The base clipping protrusion may for example have an outer diameter being equal to an inner diameter of the base.

In one or more example scannable members, the scannable member may comprise a tool receptacle, such as a screw channel, arranged on the top surface of the body of the scannable member. The tool receptacle may be configured to receive a tool, such as a screwdriver, for facilitating connection of the scannable member with the abutment, such as for insertion of the scannable member into the cavity of the abutment. The tool receptacle may have a star shape, such as a torx shape, a hex shape, a Philips shape, a fluted socket shape, a wing shape, such as a tri-wing shape, a square shape, and/or a clutch shape.

In one or more example scannable members, the body of the scannable member comprises a plurality of lamellas, or wings, extensions, tabs, etc., configured to engage with the base of the scannable member, or vice versa. The body of the scannable member may for example comprise two, three, four or five lamellas. The plurality of lamellas may extend in a longitudinal and/or radial direction from the end surface of the body of the scannable member. The plurality of lamellas may be configured to be inserted into the cavity, such as into the throughgoing hole in the base of the scannable member. The plurality of lamellas may be configured to, when inserted into the cavity of the scannable member, exert a force in a radial direction of the base of the scannable member for securing the body of the scannable member to the base of the scannable member. The plurality of lamellas may be evenly distributed on the end surface of the body of the scannable member. The plurality of lamellas may not be evenly distributed on the end surface of the body of the scannable member. In one or more example scannable members, each of the plurality of lamellas may be arranged on the first protrusion of the body of the scannable member. In one or more example scannable members, the plurality of lamellas may be arranged on the base of the scannable member and the cavity may be arranged on the body of the scannable member.

In one or more example scannable members, the scannable member has a substantially cylindrical shape. Substantially cylindrical can be seen as the main shape of the scannable member being cylindrical but can comprise one or more cut-outs, such as slots, or protruding sections. The scannable member may have the same length, such as an extension in a longitudinal direction of the scannable member, as the length of the dental implant. Thereby, data points representing the actual size, such as the actual length of the dental implant, can be obtained by performing a scan on the one or more scannable members arranged on the proximal surface of the first dental prosthesis.

In one or more other example scannable members, the scannable member has a substantially conical shape. In one or more example scannable members, the body of the scannable member may have a conical shape, such as may be tapered towards a top surface of the body. In other words, the body may be wider towards base end than towards the top surface of the body.

In one or more example scannable members, the body of the scannable member comprises a position indicator. The position indicator may be configured to be detectable by the scanner, such as by the intraoral scanner. The position indicator may be a surface that differs from the adjacent surfaces. In one or more example scannable members, the position indicator has a beveled surface. In one or more example scannable members, the beveled surface extends from a top surface of the scannable member to a lateral surface of the scannable member. The beveled surface may be a planar surface, such as a facet. The planar surface may extend from an end surface of the scannable member to a lateral surface of the scannable member at a first angle to a longitudinal axis of the scannable member. By adding the position indicator to the scannable member, the shape of the scannable member may be rendered non-symmetrical which may increase the detectability of the scannable member by the scanner. The scanner may be configured to perceive and/or detect the angles on the position indicator and may use the angles as coordinates to align the data sets of the scans. The lateral surface of the scannable member may be an envelope surface of the scannable member, such as of the cylindrical scannable member. The position indicator may be a planar surface of the scannable member, such as a facet. In one or more example scannable members the planar surface is slanted in relation to the lateral surface, such as having a normal axis arranged at a first angle to a longitudinal axis, such as a longitudinal center axis of the scannable member. The first angle may be greater than 0° and smaller than 90°, such that the planar surface is not parallel to the top surface nor the lateral surface. In one or more example scannable members, the position indicator is a cut out in the body of the scannable member. In one or more example scannable members, a surface of the position indicator, such as a first surface, such as the planar surface of the positioning indicator, is parallel, such as substantially parallel, to a longitudinal axis of the scannable member. In one or more example scannable members, the position indicator may comprise a second surface, such as a second planar surface, may be arranged substantially perpendicular to the first surface of the position indicator, such as substantially perpendicular to the longitudinal axis of the scannable member.

In one or more example scannable members, the scannable member is configured to be arranged onto an abutment, such as an abutment known to skilled person in the art, such as a temporary abutment or a final abutment. The scannable member may be a member being designed to provide an accurate scanning result. In other words, the scannable member may be configured to be detectable by the scanner, such as by a scanning device (e.g., an intraoral scanner or a dental scanning wand), and enabling the scanning device to match the parameters of the digital scannable member to the physical scannable member with high accuracy. The parameters may be one or more of a height, a width, a length, and a shape of the scannable member.

The scannable member according to the one or more examples disclosed herein has the advantage that the scannable member can be easily positioned, removed, and repositioned onto the abutment. In addition, by the scannable member being configured to mate with the implant receptacle of the abutment, the scannable member can be arranged in a position and direction in relation to the first dental prosthesis corresponding to the position and direction of the one or more dental implants to which the first dental prosthesis is configured to be arranged. Thereby, an accurate model of the first dental prosthesis and the dental implants to which the first dental prosthesis is configured to be arranged can be provided, without having to arrange a set of scannable members into the mouth of the edentulous and/or semi-edentulous patient. The dental implant may be a dental implant implanted into a mouth, such as into a jawbone, of an edentulous and/or semi-edentulous patient. Scannable herein can be seen as being detectable by a scanner, such as an intraoral scanner, for generating a data set for CAD modelling of the scannable member and/or temporary abutment.

In one or more example scannable members, the surface of the scannable member, such as the surface of the base and/or the body of the scannable member, may be treated to reduce reflectiveness of the surface, such as a light reflectiveness of the surface. The surface of the scannable member may be, for example, treated by etching, such as using an etching method. Hence, in one or more example scannable members, the scannable member comprises an etched surface. The surface of the scannable member may be etched to increase the roughness of the surface. By increasing the roughness of the scannable member, the scannability of the scannable member can be increased, since the treated surface can be less reflective than an untreated surface. Thereby the reflected light from the scanner, which may otherwise negatively affect the scan result and may prevent the scanner from providing an accurate image of the scanned objects, can be reduced. Scannability can be seen as how well the scannable member can be detected by the scanner. A device having poor scannability may not be detectable by the scanner or may provide a poor scanning result, such as a poor image quality, by e.g., introducing disturbances into the scanner during the scan. A device having good scannability may be easily detectable by the scanner or may provide a good scanning result, such as a good image quality.

In one or more example scannable members, the scannable member may be made of metal, metal alloy, a composite, and/or polymer. In one or more example scannable members, the scannable member may be made, for example, of polyether ether ketone (PEEK) or polyvinyl alcohol (PVA).

In one or more example scannable members, the scannable member may be made of metal or metal alloy, for example, the temporary abutment and/or the scannable member may be made of titanium and/or a titanium alloy. The titanium may, in one or more example temporary abutments, be surface treated to increase the roughness of the surface. The advantage of treating the surface of the scannable member is that roughness of the surface is increased, thus the surface can be made less reflective which can increase the scannability. By increasing the roughness of the surface, the reflected light from the scanner, which may otherwise negatively affect the scan result and may prevent the scanner from providing an accurate image of the scanned objects, can be reduced. If the metal surface is to smooth the scanner may not be able to create an accurate image of the scanned object as the light from the scanner may be reflected on the metal surface back to the scanner which may obscure the scanning result. Non-metallic materials, such as composites and/or polymers, have the benefit that the surfaces are less reflective and/or non-reflective, and can therefore improve the scannability of the temporary abutment and/or the scannable member, since less light is reflected back to the scanner.

The scannable member may have an outer diameter in the range of 4,0 - 5,2 mm, such as in the range of 4,2 - 5,0 mm, such as in the range of 4,4 - 4,8 mm. The scannable member may have a length, such as an extension in a longitudinal direction of the scannable member, in the range of 20,0 - 8,0 mm, such as in the range of 19,7 to 8,9. In another embodiment, the scannable member can be a one-piece scannable member, or a two-piece scannable member. In another embodiment, the one-piece scannable member can be connected to another scannable member. In another embodiment, the first piece of scannable member may have a length, such as an extension in a longitudinal direction of the scannable member, in the range of 14 to 7 mm, such as in the range of 12,9 to 8,9 mm. In another embodiment, the two-piece of scannable member may have a length, such as an extension in a longitudinal direction of the scannable member, in the range of 20 to 8 mm, such as in the range of 19,7 to 8,9 mm.

In one or more example scannable members, the scannable member may comprise a first protrusion, which may also be referred to as a clipping protrusion, configured to engage with the abutment. The first protrusion may be configured to be inserted into a cavity, such as into a throughgoing hole in the implant receptacle of the abutment. The first protrusion may be arranged on the base, such as on the base section, of the scannable member and may extend in a longitudinal direction of the scannable member. The first protrusion may be hollow or solid. The size and shape of the first protrusion may be chosen such that the first protrusion is supported, such as radially supported, by one or more sidewalls of the cavity, such as the throughgoing hole, of the abutment. The first protrusion may for example have an outer diameter being equal to the inner diameter of the throughgoing hole. In one or more example scannable members, the scannable member may comprise a plurality of protrusions configured to engage with the abutment, such as the first protrusion and a second protrusion. In other words, the scannable member may comprise one or more protrusions configured to engage with the abutment, such as one or more clipping protrusions. The second protrusion may have the same or similar properties, such as size and shape, as the first protrusion. The one or more protrusions, such as the first protrusion and/or the second protrusion, may extend in a radial direction around at least a part of a circumference of the base of the scannable member. In other words, the protrusions may be radial protrusions.

In one or more example scannable members, the base of the scannable member comprises a plurality of lamellas or wings configured to engage with the abutment. The scannable member may for example comprise two, three, four or five lamellas. The plurality of lamellas may extend in a longitudinal direction from the base of the scannable member. The plurality of lamellas may be configured to be inserted into the cavity, such as into the throughgoing hole of the implant receptacle of the abutment. The plurality of lamellas may be configured to, when inserted into the cavity of the temporary abutment, exert a force in a radial direction of the abutment for securing the scannable member to the abutment. The plurality of lamellas may be evenly distributed on the base of the scannable member. In one or more example scannable members, each at the plurality of lamellas may be arranged on the first protrusion of the scannable member.

In one or more example scannable members, the scannable member may be configured to create a form fit, such as create a mechanical fit, with the abutment. The abutment may, for example, comprise one or more indentations arranged on a surface of the cavity. The one or more indentations may be configured to receive one or more protrusions arranged in a radially outward direction of the scannable member, such as on the lamellas of the scannable member. The scannable member may thus clip onto the abutment by inserting the scannable member into the temporary abutment until the protrusion of the scannable member engages with the indentation of the temporary abutment. Correspondingly, in one or more example scannable members, the scannable member may comprise the indentation and the abutment may comprise the protrusion. The protrusion and the indentation engaging with each other may further give a user of the scannable member, such as a dentist attaching the scannable member to the temporary abutment, tactile feedback indicating that the scannable member is properly seated on the abutment. This can ensure that the scannable member is properly seated on the abutment, and thus located in a position corresponding to an actual position and direction of the dental implant. This ensures that the position of the scannable member is the same in every scan and thus that the images from the plurality of scans can be properly aligned to create the model.

In one or more example scannable members, the base of the scannable member may comprise a magnet, such as a first magnet, configured to magnetically connect the scannable member to the abutment. In one or more example scannable abutments, the abutment may be made of a magnetic material attracting the magnet of the scannable member. In one or more examples, the temporary abutment may comprise a magnet, such as a second magnet, having an opposite pole to the magnet arranged on the scannable member, thereby attracting, and securing the scannable member to the abutment. The scannable member may thus be configured to magnetically clip onto the abutment, such as magnetically attract and secure the scannable member to the abutment. The first magnet engaging with the magnetic material and/or the second magnet may give to the user of the scannable member (e.g., the dentist) a tactile feedback indicating that the scannable member is properly seated on the abutment.

In one or more example scannable members, the scannable member is configured to be screwed onto the abutment. The scannable member, such as the base and/or the body of the scannable member, may, in one or more examples, comprise a through hole configured to receive a screw for securing the scannable member to the abutment.

In one or more examples, the scannable member may comprise a thread for threading the scannable member into the abutment. The scannable member may for example comprise an outer thread and the abutment may comprise an inner thread configured to receive the outer thread of the scannable member. Correspondingly, the scannable member may, in one or more examples, comprise an inner thread and the abutment may comprise an outer thread configured to receive the inner thread of the scannable member.

In the following, the solution according to this disclosure will be described in further detail with reference to the figures. The figures are schematic and simplified for clarity, and they merely show details which aid understanding the disclosure, while other details have been left out. Throughout, the same reference numerals are used for identical or corresponding parts.

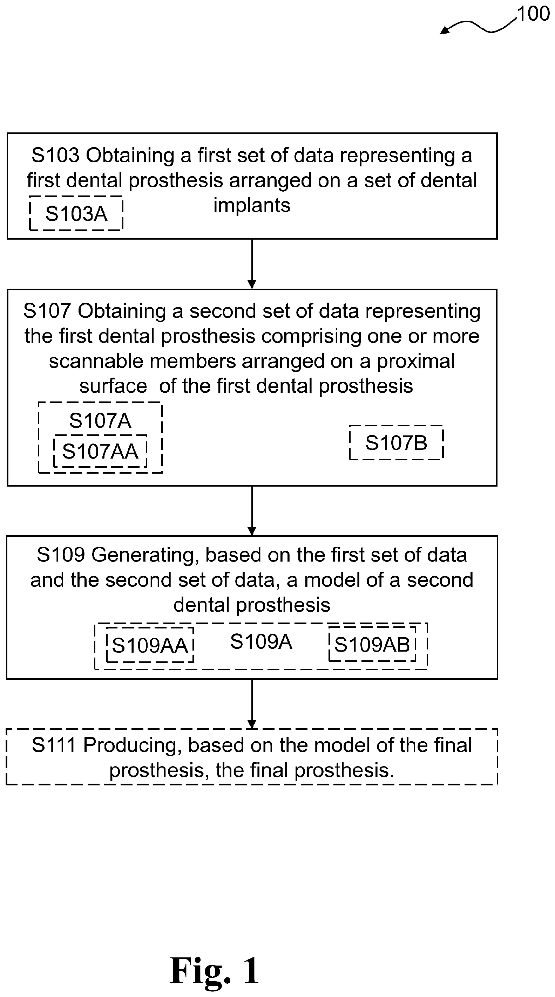

Fig. 1 is a flow chart illustrating an example method 100 for preparing a dental prosthesis according to this disclosure.

The method 100 comprises obtaining S103 a first set of data representing a first dental prosthesis arranged on a set of dental implants.

In one or more example methods, obtaining S103 the first set of data comprises scanning S103A the first dental prosthesis arranged on the set of dental implants of the edentulous person. In one or more example methods, scanning S103A comprises scanning one or more of a facial surface of the first dental prosthesis, a lingual surface of the first dental prosthesis, an occlusal surface of the first surface and a jaw of the edentulous person. The first set of data can be obtained using a scanner, such as an oral scanner or a scanning wand. The first set of data may be obtained without any scannable members being arranged on the first dental prosthesis or on the dental implants.

The first set of data may be obtained by performing a first scan on the first dental prosthesis arranged on the set of dental implants. The scanner may scan the first dental prosthesis to generate information related to the first dental prosthesis, such as information indicative of one or more of implant reference coordinates, such as reference coordinates of one or more teeth of the first dental prosthesis, and a morphology of a jawbone of the edentulous and/or semi-edentulous patient, such as a morphology of a maxillary and/or a mandibular bone of the edentulous and/or semi-edentulous patient, and, if possible, a soft tissue of the edentulous and/or semi-edentulous patient.

The first scan may be performed with the first dental prosthesis, such as on an interim prosthesis, being arranged in the mouth of the patient. The first scan may, in one or more example methods, provide information on a soft tissue of the patient.

The first dental prosthesis may be arranged on the dental implant using the set of abutments.

The method 100 comprises obtaining S107 a second set of data representing the first dental prosthesis comprising one or more scannable members arranged on a proximal surface of the first dental prosthesis. The one or more scannable members may be arranged on the implant receptacle of the respective abutment. By obtaining the second set of data representing the one or more scannable members arranged on the implant receptacle of the respective abutment, the scannable members may be indicative of spatial data of the set of dental implants to which the dental prosthesis is configured to be mounted.

In one or more example methods, obtaining S107 the second set of data comprises arranging S107A the one or more scannable members, such as a plurality of scannable members, on the proximal surface of the first dental prosthesis.

In one or more example methods, arranging S107A the one or more scannable members, such as the plurality of scannable members, on the proximal surface comprises arranging S107AA each of the one or more scannable members to the implant receptacle of a respective abutment. In other words, a first scannable member of the one or more scannable members may be arranged to the implant receptacle of a first abutment. Optionally, a second scannable member, a third scannable member, and a fourth scannable member may be arranged in a second abutment, a third abutment and a fourth abutment respectively. This may be the case, for example, when the first dental prosthesis comprises a set of abutments for securing the first dental prostheses to the set of dental implants, and each abutment of the set of abutments comprises an implant receptacle for receiving a respective dental implant of the set of dental implants.

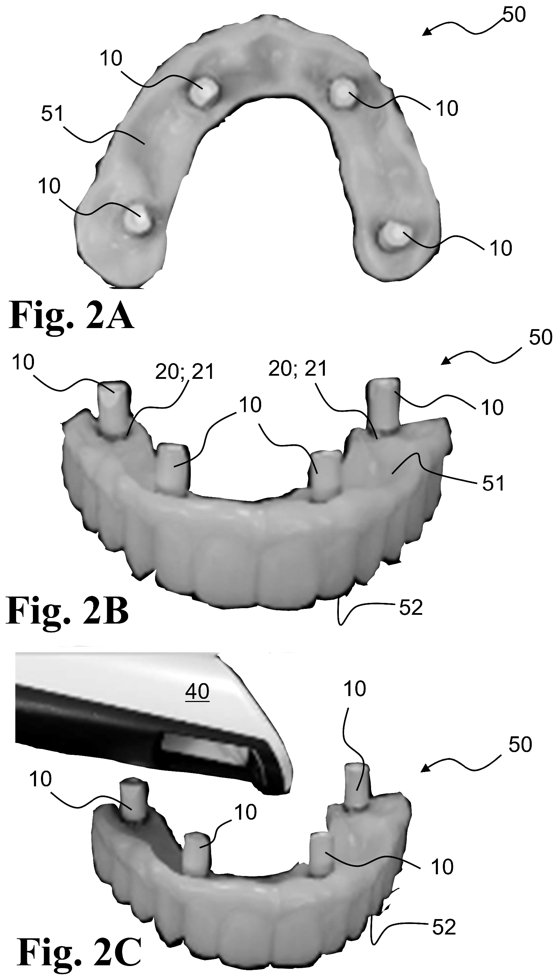

In one or more example methods, obtaining S107 the second set of data comprises scanning S107B the first dental prosthesis with the one or more scannable members, such as the plurality of scannable members. Scanning S107B may also be referred to as performing a second scan on the first dental prosthesis with the one or more scannable members, such as the plurality of scannable members. An example method for obtaining S107 the second set of data is described in further details with regards to Fig. 2A-2C. A set of scannable members 10 may be arranged on the proximal surface 51 of the first dental prosthesis 50. The set of scannable members may comprise one or more scannable members 10. The set of scannable members 10 may be arranged on a proximal end of the abutment 20, such as on an implant receptacle 21 of the abutment 20. The proximal end of the abutment 20 can herein be seen as the end of the abutment 20 configured to face the implant and/or the gum and/or the jaw of an edentulous and/or semi-edentulous patient. The second scan may be performed using the scanner 40, such as the intraoral scanner. The second scan is performed extraorally, such as outside of the patient's mouth. The scanner 40 may scan the first dental prosthesis 50 together with the set of scannable members 10 to generate the second set of data. The second set of data may be indicative of the one or more implant reference coordinates and a morphology of the first dental prosthesis 50, such as a morphology of a maxillary and/or a mandibular first dental prosthesis 50. The second scan may be performed with the first dental prosthesis 50 arranged on a working surface, such as with a distal surface 52 of the first dental prosthesis 50 facing the working surface, to allow the scanner 40 to scan, such as capture, the proximal surface 51 of the first dental prosthesis 50 comprising the set of scannable members 10. The first dental prosthesis 50 may thus be removed from the one or more dental implants to allow the one or more scannable members 10 to be arranged on the one or more implant receptacles 21 of the set of abutments 20 in place of the dental implants. The scanner may be configured to obtain, for example using imaging circuitry and/or memory circuitry, the second set of data representing the first dental prosthesis 50 comprising the one or more scannable members 10 arranged on a proximal surface 51 of the first dental prosthesis 50. In one or more example methods each of the one or more scannable members 10 may be arranged onto the respective abutment 20 of the plurality of abutments 20 by clipping the scannable member 10 onto the abutment 20, such as to the implant receptacle 21 of the abutment 20. The second set of data may comprise data indicative of the plurality of scannable members 10, such as a set of data points indicative of the plurality of scannable members 10, to obtain implant reference coordinates, and/or data indicative of the first dental implant, such as a landscape of the first dental prosthesis, thus providing an accurate model for the second dental prosthesis. The second data set may be indicative of the one or more dental implant reference coordinates and a morphology of the first dental prosthesis, such as a morphology of a maxillary and/or a mandibular first dental prosthesis. By arranging the plurality of scannable members 10 onto the implant receptacle 21 of the respective abutment 20 of the set of abutments 20 the scannable members 10 will be arranged in the position and extend in the direction of the dental implants to which the first dental prosthesis 50 is configured to be arranged. Hence, the second set of data may be indicative of reference coordinates for the one or more dental implants to which the first dental prosthesis 50 and/or the second dental prosthesis are configured to be arranged.

The method 100 comprises generating S109, based on the first set of data and the second set of data, a model, such as a digital model, of a second dental prosthesis. In one or more example methods, generating S109 the model comprises aligning S109A the first set of data with the second set of data. In one or more example methods, aligning S109A comprises identifying S109AA one or more reference areas of a facial surface and/or a lingual surface of the first dental prosthesis in the first data set and in the second data set. The reference area may be one or more of an area of a tooth of the dental prosthesis, an outline of one or more teeth of the dental prosthesis, and an area between two teeth of the dental prosthesis. In one or more example methods, aligning S109A comprises aligning S109AB the one or more identified reference areas in the first data set with the one or more identified reference areas in the second data set. In other words, the identified reference areas in the first set of data are aligned with the identified reference areas in the second data set, such that the identified reference areas in the first and the second data sets overlap. In other words, generating the model may comprise superimposing the corresponding identified reference areas of the first set of data and the second set of data. The model may, in one or more example methods, be generated using CAD software, such as CAD software stored on a memory of the scanner and executed by the processor circuitry of the scanner.

In one or more example methods, the method comprises producing S111 the second dental prosthesis, such as a final prosthesis, based on the model of the second dental prosthesis. The second dental prosthesis may be produced using the CAM software based on the model created by the CAD software. Producing S111 the second dental prosthesis may comprise one or more of milling, additive manufacturing, such as 3D-printing, lathing, and casting. The CAM-software may be stored on a memory and may be executed by a processor of the computer-controlled manufacturing tool of the dental prosthesis manufacturing system.

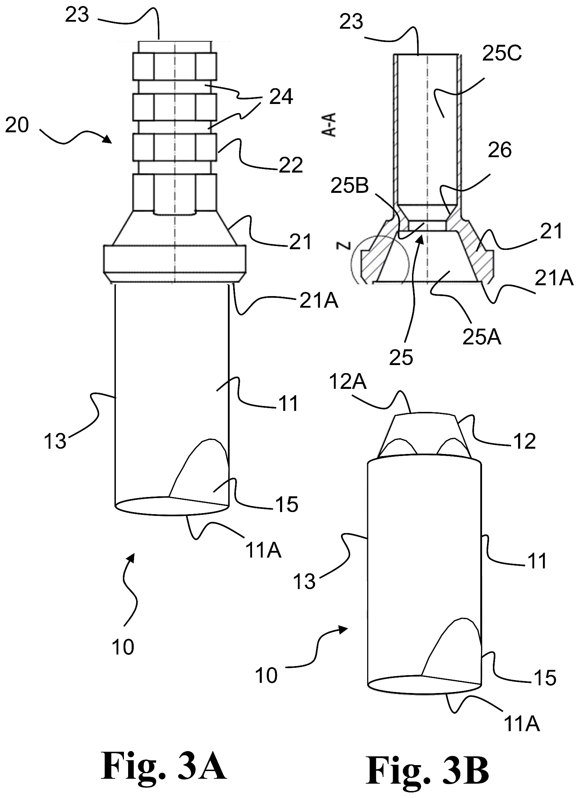

Fig. 3A-3B illustrate an example scannable member 10 (such as shown in Figs. 2A-2C) for determining a position of a dental implant according to this disclosure. The scannable member 10 is configured to be arranged on a proximal end of an abutment 20 for fixing a dental prosthesis to a dental implant. The scannable member 10 comprises a body 11 and a base 12. The base 12 is configured to mate with an implant receptacle 25A of the abutment 20. The example scannable member of Figs. 3A-3B comprises a cylindrical shape. In other words, the body 11 of the scannable member 10 may have a cylindrical shape. In one or more example scannable members, the body 11 of the scannable member comprises a position indicator 15. The position indicator 15 may be configured to be detectable by the scanner, such as by the intraoral scanner. The position indicator 15 may be a surface that differs from the adjacent surfaces. In one or more example scannable members 10, the position indicator 15 has a beveled surface. In one or more example scannable members 10, the beveled surface extends from a top surface 11A of the scannable member to a lateral surface 13 of the scannable member 10. The position indicator may be a planar surface of the scannable member, such as a facet, that is slanted in relation to the lateral surface 13, such as having a normal axis arranged at a first angle to a longitudinal axis, such as a longitudinal center axis, of the scannable member 10. The planar surface may extend from the top surface 11A of the scannable member 10 to the lateral surface 13 of the scannable member 10 at a first angle to a longitudinal axis of the scannable member 10. The first angle may be greater than 0° and smaller than 90°, such that the planar surface is not parallel to the top surface 11A nor to the lateral surface 13.

In the example scannable member 10 shown in Figs. 3A-3B, the body 11 of the scannable member 10 is integral to (e.g., integral with) the base 12 of the scannable member 10. In one or more example scannable members, the body 11 of the scannable member 10 may be separate from the base 12 of the scannable member 10 and may be configured to clip onto or be screwed onto the base 12 of the scannable member 10. The abutment 20 has a proximal section 21, such as a base section, comprising a proximal end 21A, an intermediate section 22, and a distal end 23. The intermediate section 22 may be arranged between the distal end 23 and the proximal section 21. The intermediate section 22 of the example abutment 20 may have a cylindrical shape. The proximal section 21 of the abutment 20 is configured to be arranged onto a dental implant. The abutment 20 may be configured to be secured to a dental prosthesis for securing the dental prosthesis to the dental implant. The abutment 20 may be secured to the dental prosthesis by gluing and/or cementing the abutment 20 to the dental prosthesis. To ensure that the dental prosthesis is safely secured to the abutment 20, the intermediate section 22 of the abutment 20 may comprise one or more longitudinal securing means 24 for preventing the dental prosthesis to slide along the abutment 20 in a longitudinal direction of the abutment 20. The longitudinal securing means 24 may be indentations and/or protrusions, such as grooves or ridges, arranged on the outer surface of the intermediate section. When the first dental prosthesis is adhered to the abutment 20, such as by being glued and/or cemented to the temporary abutment, the adhesive, such as the glue and/or cement can engage with the longitudinal securing means and thus prevent the first dental prosthesis to move in the longitudinal direction, such as along a length of the abutment 20, such as along a longitudinal axis extending centrally from the proximal end 21A of the abutment 20 to the distal end 23 of the abutment 20. In the example abutment 20 shown in Fig. 3A, the longitudinal securing means 24 are grooves arranged around a circumference of the intermediate section 22 of the abutment 20. The scannable member 10 may be arranged at the proximal section 21 of the abutment 20.

Fig. 3B shows a sectional view of the example scannable member 10 configured to mate with an abutment 20. As can be seen in Fig. 3B, the example abutment 20 is hollow, such as comprises a throughgoing hole 25. The throughgoing hole 25 may extend from the distal end 11 of the scannable member 10 to the proximal end 21A of the abutment 20. The throughgoing hole 25 may be configured to receive a screw for securing the abutment 20 to the dental implant. The throughgoing hole 25 may have a first section 25A having a first diameter, a second section 25B having a second diameter and a third section 25C having a third diameter. The first section 25A of the throughgoing hole 25 may be arranged at the proximal section 21 of the abutment 20 and may be configured to receive the dental implant. The first section 25A is herein also referred to as an implant receptacle, such as a receptacle for receiving the dental implant. In one or more example abutments 20, the first section 25A of the throughgoing hole 25 has a conical shape, such as a diameter increasing towards the proximal end 21A of the abutment 20. In one or more example scannable members, the base 12 of the scannable member 10 has a conical shape, such as the conical shape has a diameter decreasing towards a first end 12A of the base 12. The base 12 may thus have a shape corresponding to the first section 25A of the abutment 20. The third section 25C of the throughgoing hole 25 may extend from the distal end 23 of the abutment 20 to the intermediate section 22 of the abutment 20. The third section 25C may be configured to receive a screw and a screwdriver for tightening the screw. The second section 25B of the throughgoing hole 25 may be arranged between the first section 25A and the third section 25C of the throughgoing hole 25. The second section 25B of the throughgoing hole 25 may have a smaller diameter than the first section 25A and the third section 25C of the throughgoing hole, thereby a contact surface 26 for a screw being inserted into the third section 25C of the throughgoing hole 25 is created by the material surrounding the second section 25B of the throughgoing hole 25. Upon tightening the screw into the dental implant, the screw exerts a force on the contact surface 26 securing the abutment 20 to the dental implant or to the scannable member 10.

The base 12 of the scannable member 10 is configured to mate with the proximal end of the abutment 20. The example base 12 of the scannable member 10 may be configured to mate with the abutment 20 by clipping or screwing the base 12 of the scannable member 10 to the abutment 20. The scannable member 10 may be inserted into the implant receptacle, such as into the first section 25A of the throughgoing hole 25 of the abutment 20. The base 12 of the scannable member 10 may be secured to the abutment 20 by means of a screw and/or by means of a form fit, such as by a first protrusion and/or a plurality of lamellas engaging with the inside of the throughgoing hole 25. In one or more example abutments, the inner surface of the throughgoing hole 25 comprises a thread configured to engage with the screw for securing the scannable member 10 to the abutment 20 and/or to a thread arranged on the scannable member 10. The scannable member 10 may for example comprise an outer thread and the abutment 20 may comprise an inner thread configured to receive the outer thread of the scannable member 10. Correspondingly, the scannable member 10 may, in one or more example abutments 20, comprise an inner thread and the abutment 20 may comprise an outer thread configured to receive the inner thread of the scannable member 10.

In one or more example scannable members 10, the scannable member 10 comprises a magnet configured to engage with a magnet arranged on the abutment 20 for securing the scannable member 10 to the abutment 20. The magnet of the abutment 20 may have an opposite pole to the magnet arranged on the scannable member 10, thereby attracting, and securing the scannable member 10 to the abutment 20.

The scannable member 10 may be made of a metal or metal alloy, such as, for example, of titanium or a titanium alloy. The titanium may, in one or more example abutments, be surface treated to increase the roughness. Increasing the roughness of the material may render the scannable member 10 scannable and/or may increase the scannability of the scannable member 10. By surface treating the scannable member 10, the metal surface can be made less reflective. The surface of the scannable member 10 may be treated to reduce reflectiveness of the surface, such as a light reflectiveness of the surface. The surface of the scannable member 10 may for example be treated by etching, such as using an etching method. Hence, in one or more example scannable members, the scannable member 10 comprises an etched surface. Thereby, the reflected light from the scanner, which may otherwise negatively affect the scan result and may prevent the scanner from providing an accurate image of the scanned objects, can be reduced. If the metal surface is to smooth the scanner may not be able to create an accurate image of the scanned object as the light from the scanner may be reflected on the metal surface.

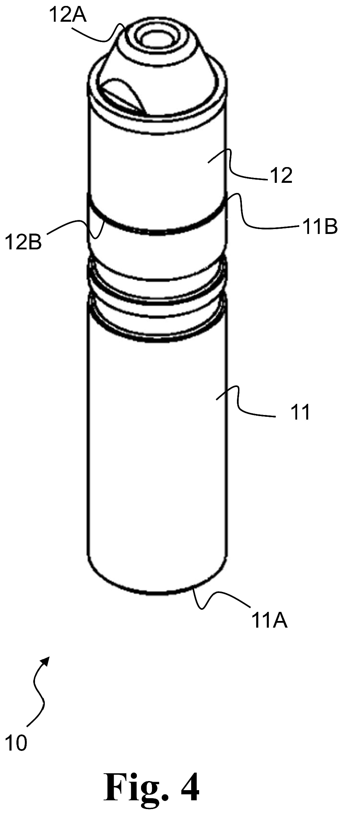

Fig. 4 illustrates an example scannable member 10 for determining a position of a dental implant according to this disclosure. The example scannable member 10 according to Fig. 4 differs from the example scannable member 10 of Figs. 3A-3B in that the base 12 of the scannable member 10 is releasably connected to the body 11 of the scannable member 10. The base 12 of the scannable member 10 may be configured to clip onto and/or be screwed onto the body 11 of the scannable member 10. Thereby, a plurality of bases 12 and/or bodies 11 can be combined to create different scannable members 10 representing the dental implant used. The base 12 of the scannable member may comprise a first end 12A configured to mate with the implant receptacle of the first dental prosthesis and a second end 12B configured to mate with the body 11 of the scannable member 10, such as to a base end 11B of the body 11 of the scannable member 10. The body 11 of the scannable member may comprise a top end 11A and the base end 11B configured to mate with the base 12, such as to the second end 12B of the base 12, of the scannable member 10. In one or more example scannable members 10, the base 12, such as a first end 12A of the base 12, has a conical shape. This may for example be the case when a mating surface of the dental implant has a conical shape. The example scannable member of Fig. 4 has a cylindrical shape. In other words, the body 11 of the scannable member 10 may have a cylindrical shape. However, in one or more other example scannable members 10, the body 11 of the scannable member may have a conical shape, such as may be tapered towards the top surface 11A of the body 11. In other words, the body 11 may be wider towards base end 11B than towards the top surface 11A of the body 11.

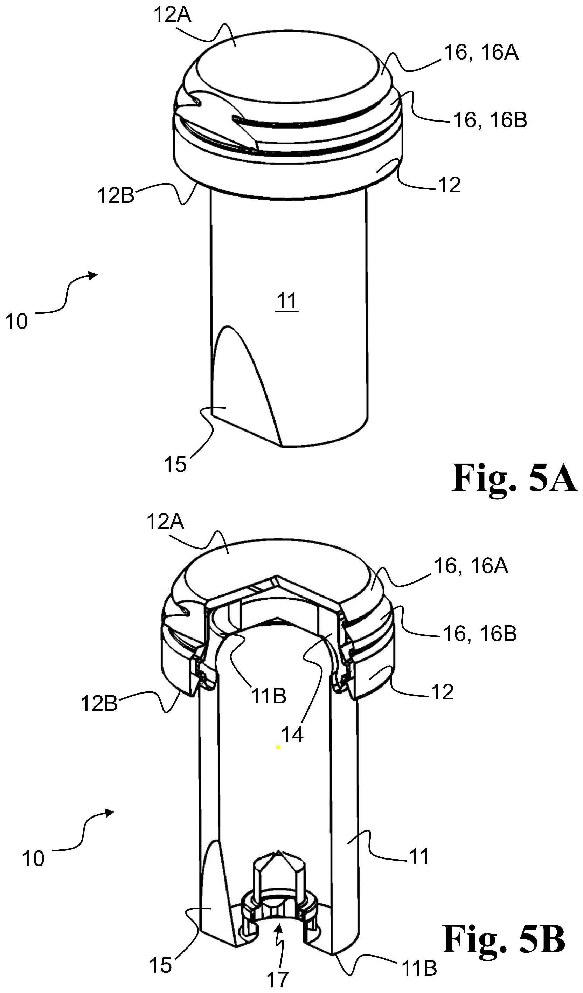

Figs. 5A-5B illustrate a scannable member 10 for determining a position of a dental implant according to one or more examples of this disclosure, the scannable member being configured to be clipped onto the abutment. The scannable member shown in Fig. 5A-5B comprises a plurality of protrusions, such as a first protrusion 16A and a second protrusion 16B, configured to engage with the abutment. The first protrusion 16A and the second protrusion 16B may herein be referred to as clipping protrusions. The first protrusion 16A and the second protrusion 16B are configured to be inserted into a cavity, such as into a throughgoing hole in the implant receptacle of the abutment. The first protrusion 16A and the second protrusion 16B are arranged on the base 12, such as on the base section, of the scannable member 10. The size and shape of the plurality of protrusions may be chosen such that the protrusion is supported, such as radially supported, by one or more sidewalls of the throughgoing hole of the abutment. The first protrusion 16A and the second protrusion 16B may have an outer diameter being equal to the inner diameter of the throughgoing hole. In the example scannable member 10 shown in Figs. 5A and 5B, the plurality of protrusions, such as the first protrusion 16A and the second protrusion 16B, are shaped as lamellas, or wings. The plurality of protrusions, such as the first protrusion 16A and the second protrusion 16B, extend in a radial direction around at least a part of a circumference of the base 12 of the scannable member 10. In other words, the protrusions may be radial protrusions. The plurality of protrusions 16A, 16B can be configured to, when inserted into the cavity of the abutment, such as into a throughgoing hole in the implant receptacle of the abutment, exert a force in a radial direction of the base 12 of the scannable member 10 for securing the scannable member 10 to the abutment. The plurality of protrusions, such as the first protrusion 16A and the second protrusion 16B, may be rigid or flexible. The base 12 may be integral with the scannable member or may be releasably connected to the body 11 of the scannable member 10 in the same manner as discussed in relation to Fig. 4. By making the base 12 releasably connected to the body 11, a plurality of bases 12 and/or bodies 11 can be combined to create different scannable members 10 representing, such as being configured to connect to, the dental implant used.

Fig. 5B illustrates a scannable member 10 having a base 12 being releasably connected to the body 11. The base 12 may comprise a first end 12A configured to mate with the implant receptacle of the first dental prosthesis and a second end 12B configured to mate with the body 11 of the scannable member 10, such as to a base end 11B of the body 11 of the scannable member 10. The example base 12 in Fig. 5B comprises an insert 14 arranged within a cavity, such as on an inner surface, of the base 12 and being configured to engage with the body 11 of the scannable member 10. The cavity may be arranged on the second end 12B of the base 12 and may be configured for receiving the body 11, such as the base end 11B of the body 11. The insert 14 may be a matrix, such as a matrix made of polymer, comprising the groove for receiving the base clipping protrusion of the body. As can be seen in Fig. 5B the scannable member may comprise a tool receptacle 17, such as a screw channel, arranged on the top surface 11A of the body 11 of the scannable member. The tool receptacle may be configured to receive a tool, such as a screwdriver, for facilitating the connection of the scannable member with the abutment, such as for inserting the scannable member 10 into the cavity of the abutment. The tool receptacle may have a star shape, such as a torx shape, a hex shape, a Philips shape, a fluted socket shape, a wing shape, such as a tri-wing shape, a square shape, and/or a clutch shape.

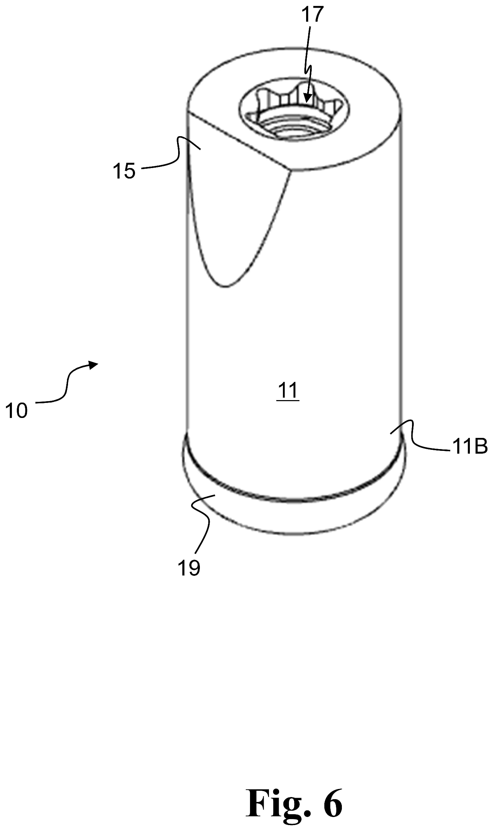

Fig. 6 illustrates a body 11 of the scannable member 10 according to one or more examples of this disclosure. The body 11 is configured to be used with a base, such as the base 12 of Figs. 5A-5B. The body 11 is configured to be releasably connected with the base, such as the base 12 of Figs. 5A-5B. The example scannable member of Fig. 6 comprises a base clipping protrusion 19 configured to engage with the base. The base clipping protrusion 19 is arranged on the base end 11B of the body 11 of the scannable member 10. The base clipping protrusion 19 extends in a radial direction of the body 11. The base clipping protrusion 19 may be arranged around at least a part of the circumference of the body 11. In one or more example bodies, such as in the example body 11 shown in Fig. 6, the base clipping protrusion 19 may be shaped as a collar extending around the entire circumference of the body 11 at the base end 11A of the body 11. The base may comprise a corresponding groove, such as a body clipping groove, for receiving the base clipping protrusion 19. By inserting the body 11 into the base until the base clipping protrusion 19 engages the body clipping groove, the body 11 may be releasably connected to the base. The base clipping protrusion 19 may be hollow or solid. The size and shape of the base clipping protrusion 19 may be chosen such that the base clipping protrusion 19 is supported, by one or more sidewalls of the base 12. The base clipping protrusion 19 may for example have an outer diameter being equal to an inner diameter of the base 12.

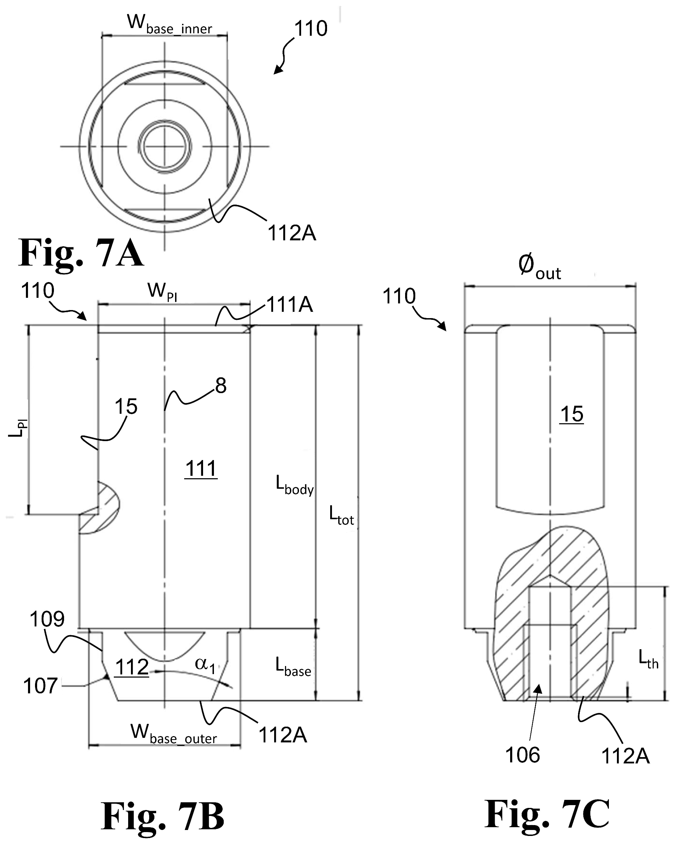

Figs. 7A-C illustrate an example scannable member 110 according to this disclosure. The scannable member 110 comprises an example body 111, an example base 112, and an position indicator 15. Fig. 7A is a top down view seen in the direction of the first end 112A of the base of the scannable member 110. Fig. 7B is a first side view of the scannable member 10 seen in a direction perpendicular to a position indicator 15. Fig. 7C is a second side view of the scannable member 110 seen in a direction of the position indicator 15. The position indicator 15 may in one or more examples, be a cut out in the body 111, such that a surface of the position indicator 15 is parallel to a longitudinal axis 8 of the scannable member 110. The example scannable member 110 may be configured to be used together with a 4,6 mm diameter platform for dental implants. The example scannable member of Figs. 7A-7C may have an outer diameter ∅ₒᵤₜ, such as an outer diameter of the body 111, in the range of 4,0 - 5,0 mm, such as in the range of 4,2 - 4,7 mm, such as in the range of 4,45 - 4,55 mm, such as in the range of 4,49 - 4,51 mm, such as 4,5 mm. The example body 111 of Figs. 7A-7C may have a length L_{body} in the range of 7 - 9 mm, such as in the range of 7,2-8,8 mm, such as in the range of 7,5-8,5 mm, such as in the range of 7,8 - 8,2 mm, such as in the range of 7,9 - 8,1 mm, such as in the range of 7,995 - 8,005 mm. The positioning indicator 15 arranged in the body 111 may have a length L_{PI} from the top end 11A in the range of 4,8 - 5,2 mm, such as in the range of 4,9 - 5,1 mm, such as 4,97 - 5,03 mm. A width W_{PI} of the body 111 from the positioning indicator 15 in a direction perpendicular to the surface of the positioning indicator at the widest part of the body 111 may be in the range of 3,8 - 4,2 mm, such as in the range of 3,9 - 4,1 mm, such as in the range of 3,99 - 4,01 mm. The base 12 may have a length L_{base} in the range of 1,8 - 2,0 mm, such as in the range of 1,85 - 1,95 mm. The base 112 may comprise a first section 107 and a second section 109. The second section 109 extends between the second end 112B of the base 112 and the first section 107. The first section 107 extends between the first end 112A of the base 112 and the second section 109. In the example base 112 shown in Figs. 7A-7C the second section 109 has a substantially cylindrical shape, such as has a circumferential surface being substantially parallel to the longitudinal axis 8 of the scannable member 110. The first section 107 has a slanted circumferential surface, which is slanted to the longitudinal axis 8 by an angle α₁ in the range of 20-24 degrees, such as in the range of 21 - 23 degrees, such as in the range of 21,66 - 22,34 degrees. The base 112 may thus have a conical shape. The base 112 of the example scannable member 110 may have an outer width W_{base_outer} in the range of 3,8 - 4,2 mm, such as in the range of 3,9 - 4,1 mm, such as in the range of 3,98 - 4,02 mm. The base 112 of the example scannable member 110 may have an outer width W_{base_in} in the range of 3,1 - 3,5 mm, such as in the range of 3,2 - 3,4 mm, such as in the range of 3,28 - 3,32 mm. The base 112 of the example scannable member 110 may further comprise a threaded hole 106 arranged on the first end 112A of the base 112 for receiving a screw for securing the scannable member 110 to an abutment. The threaded hole 106 is arranged on the first end 12A of the base 112. The threaded hole 106 may have a length Lₜₕ, such as an extension along the longitudinal axis 8 of the scannable member in the range of 2,9 - 3,1 mm, such as in the range of 2,95 - 3,05 mm. The thread of the threaded hole 106 may have a diameter M1,4. The scannable member 110 may have a total length Lₜₒₜ in the range of 9,5-10,3 mm, such as in the range of 9,7 - 10,1 mm, such as in the range of 9,8 - 10 mm, such as 9,9 mm.

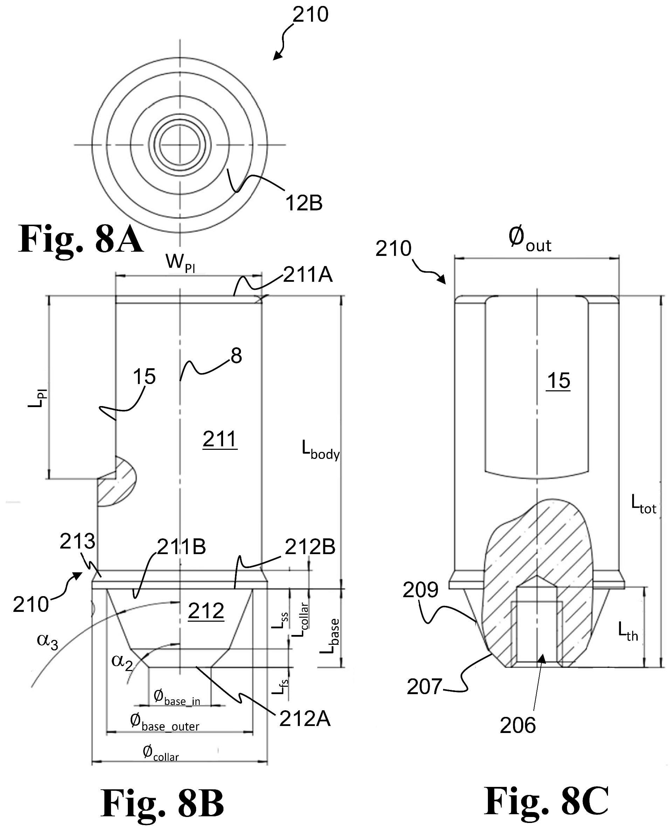

Figs. 8A-C illustrate an example scannable member 210 according to this disclosure. The scannable member 210 comprises an example body 211, an example base 212, and a position indicator 15. Fig. 8A is a top-down view seen in the direction of the first end 212A of the base 212 of the scannable member 10. Fig. 8B is a first side view of the scannable member 210 seen in a direction perpendicular to a position indicator 15. Fig. 8C is a second side view of the scannable member 210 seen in a direction of the position indicator 15. The example scannable member 210 may be configured to be used together with a 4,8 mm diameter platform for dental implants. The body 211 of the example scannable member 210 corresponds to the body 111 of the scannable member illustrated in Figs. 7A-7C. In other words, the dimensions ∅ₒᵤₜ, L_{body}, W_{PI}, and L_{PI} of the body 211 may correspond to the dimensions given in relation to the body 111 in Figs. 7A-7C. The body may comprise a collar 213 arranged at the base end 211B of the body 211. The collar may provide a seating surface for the scannable member in a longitudinal direction. The collar 213 may abut a surface of the abutment when the scannable member 210 is correctly seated in the abutment. The collar 213 may have a diameter ∅_{collar} in the range of 4,75 - 4,85 mm, such as in the range of 4,78 - 4,82 mm. The collar 213 may have a length L_{collar} in the range of 0,4 - 0,6 mm, such as in the range of 0,45 - 0,55 mm, such as 0,5 mm. The base 212 however differs from the base 211 in that both the first section 207 and the second section 209 of the base 212 are slanted, such are arranged at a respective angle α₂ and α₃ to the longitudinal axis 8 of the scannable member 210. The first section 207 is arranged at the angle α₂ to the longitudinal axis 8, wherein the angle α₂ is in the range of 40-50 degrees, such as in the range of 42 - 48 degrees, such as in the range of 44 - 46 degrees, such as 45 degrees. The base 212 may thus have a conical shape. The first section 207 may have a length L_{fs}, such as an extension along the longitudinal axis 8, in the range of 0,4 - 0,6 mm, such as 0,5 mm. The second section 209 may have a length Lₛₛ, such as an extension along the longitudinal axis 8, in the range of 2,0 - 2,3 mm, such as in the range of 2,1 - 2,2 mm, such as in the range of 2,14-2,16 mm. The second section 209 is arranged at the angle α₃ to the longitudinal axis 8, wherein the angle α₃ is in the range of 20 - 23 degrees, such as in the range of 21 - 22 degrees, such as in the range of 21,4 - 21,6 degrees. The base 212 has an outer diameter ∅_{base_outer} at its widest section, which herein is at the second end 12B of the base 212, in the range of 3,8 - 4,2 mm, such as in the range of 3,9 - 4,1 mm, such as 4 mm. The base 212 has an inner diameter ∅_{base_in} at its narrowest section, which herein is at the first end 212A of the base 212, in the range of 3,8 - 4,2 mm, such as in the range of 3,9 - 4,1 mm, such as 4 mm. The scannable member 210 may have a total length Lₜₒₜ in the in the range of 9,8 - 10,5 mm, such as in the range of 10-10,3 mm, such as 10,15 mm. The base 212 of the example scannable member 210 of may further comprise a threaded hole 206 arranged for receiving a screw for securing the scannable member to an abutment. The threaded hole 206 is arranged on the first end 212A of the base 212. The threaded hole 206 may have a length Lₜₕ, such as an extension along the longitudinal axis 8 of the scannable member in the range of 2,1 - 2,3 mm, such as in the range of 2,15 - 2,25 mm, such as 2,2 mm. The thread of the threaded hole 116 may have a diameter M1,4.

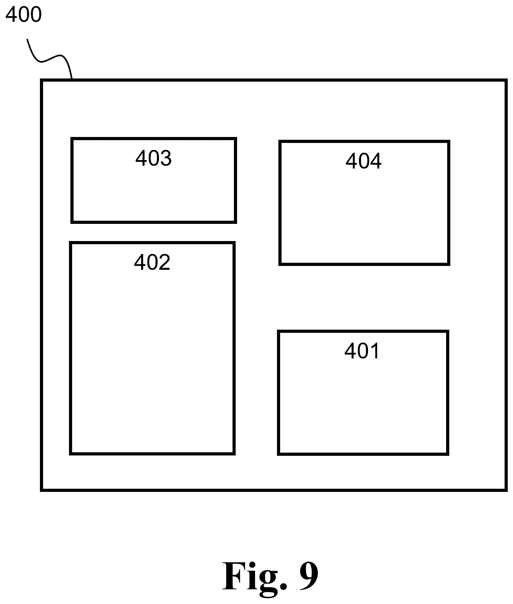

Fig. 9 shows a block diagram of an example scanner 400, such as an intraoral scanner, according to the disclosure. The scanner 400 comprises memory circuitry 401, processor circuitry 402, imaging circuitry 403 and an interface 404. The interface 404 may be a wired or a wireless interface. The scanner 400 may be configured to perform any of the methods disclosed in Fig. 1. In other words, the scanner 400 may be configured for preparing a dental prosthesis.

The scanner 400 is configured to perform a first scan of a plurality of abutments comprising the respective scannable member arranged on a respective dental implant.

The scanner 400 is configured to obtain a first set of data representing a first dental prosthesis arranged on a set of dental implants.

The scanner 400 is configured to obtain a second set of data representing the first dental prosthesis comprising one or more scannable members arranged on a proximal surface of the first dental prosthesis.

The scanner 400 is configured to generate, based on the first set of data and the second set of data, a model of a second dental prosthesis.

In one or more example scanners, the interface 404 is configured for wired or wireless communication with a computer running a CAD-software or with a computer-controlled manufacturing tool for producing a second dental prosthesis, such as a final dental prosthesis.

The scanner 400 is configured to send, for example, via the interface 404, to the computer-controlled manufacturing tool, information allowing the computer-controlled manufacturing tool to produce a second dental prosthesis, such as manufacturing instructions for manufacturing of the second dental prosthesis. The manufacturing instructions may comprise data indicative of the model of the second dental prosthesis.

Processor circuitry 402 is optionally configured to perform any of the operations disclosed in Fig. 1A (such as any one or more of S103, S103A, S107, S107A, S107AA, S107AB, S107B, S109, S109A, S109AA, S109AB, S111). The operations of the scanner 400 may be embodied in the form of executable logic routines (for example, lines of code, software programs, etc.) that are stored on a non-transitory computer readable medium (for example, memory circuitry 401) and are executed by processor circuitry 402 and/or imaging circuitry 403).

Furthermore, the operations of the scanner 400 may be considered a method that the scanner 400 is configured to carry out. Also, while the described functions and operations may be implemented in software, such functionality may also be carried out via dedicated hardware or firmware, or some combination of hardware, firmware and/or software.

Memory circuitry 401 may be one or more of a buffer, a flash memory, a hard drive, a removable media, a volatile memory, a non-volatile memory, a random-access memory (RAM), or other suitable device. In a typical arrangement, memory circuitry 401 may include a non-volatile memory for long term data storage and a volatile memory that functions as system memory for processor circuitry 402. Memory circuitry 401 may exchange data with processor circuitry 402 over a data bus. Control lines and an address bus between memory circuitry 401 and processor circuitry 402 may also be present (not shown in Fig. 9). Memory circuitry 401 is considered a non-transitory computer readable medium.

Memory circuitry 401 may be configured to store first scan data, second scan data, the model of the second dental prosthesis and/or manufacturing instructions in a part of the memory.

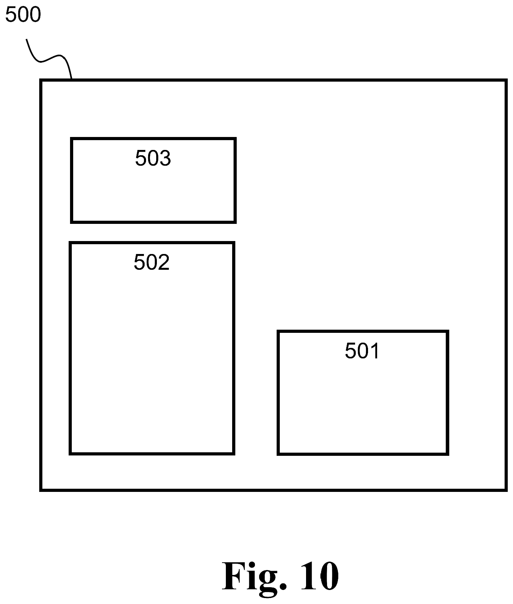

Fig. 10 shows a block diagram of an example computer-controlled manufacturing tool 500, such as a 3D-printer, a lathing machine and/or a casting machine, according to the disclosure. The computer-controlled manufacturing tool 500 comprises memory circuitry 501, processor circuitry 502, and an interface 503. The interface 503 may be a wired or a wireless interface. The computer-controlled manufacturing tool 500 may be configured to perform any of the methods disclosed in Fig. 1. In other words, the computer-controlled manufacturing tool 500 may be configured for preparing a dental prosthesis.

The computer-controlled manufacturing tool 500 is configured to produce the second dental prosthesis based on the model of the second dental prosthesis.

In one or more example scanners, the interface 503 is configured for wired or wireless communication with a computer running a CAD-software or with a scanner, such as the scanner 400 according to this disclosure.

The computer-controlled manufacturing tool 500 is configured to receive, for example, via the interface 503, from the scanner 400, information allowing the computer-controlled manufacturing tool 500 to produce the second dental prosthesis, such as manufacturing instructions for manufacturing of the second dental prosthesis. The manufacturing instructions may comprise data indicative of the model of the second dental prosthesis.

Furthermore, the operations of the computer-controlled manufacturing tool 500 may be considered a method that the computer-controlled manufacturing tool 500 is configured to carry out. Also, while the described functions and operations may be implemented in software, such functionality may also be carried out via dedicated hardware or firmware, or some combination of hardware, firmware and/or software.

Memory circuitry 501 may be one or more of a buffer, a flash memory, a hard drive, a removable media, a volatile memory, a non-volatile memory, a random-access memory (RAM), or other suitable device. In a typical arrangement, memory circuitry 501 may include a non-volatile memory for long term data storage and a volatile memory that functions as system memory for processor circuitry 502. Memory circuitry 501 may exchange data with processor circuitry 502 over a data bus. Control lines and an address bus between memory circuitry 501 and processor circuitry 502 also may be present (not shown in Fig. 10). Memory circuitry 501 is considered a non-transitory computer readable medium.

Memory circuitry 501 may be configured to store the model of the second dental prosthesis and/or manufacturing instructions in a part of the memory.

Examples of methods and products (method, and scannable member) according to the disclosure are set out in the following items:
Item 1. A method for preparing a dental prosthesis, wherein the first dental prosthesis comprises a set of abutments for securing the first dental prostheses to the set of dental implants, each abutment of the set of abutments comprising an implant receptacle for receiving a respective dental implant of the set of dental implants, the method comprising:
   - obtaining (S103) a first set of data representing a first dental prosthesis arranged on a set of dental implants,
   - obtaining (S107) a second set of data representing the first dental prosthesis comprising one or more scannable members arranged on a proximal surface of the first dental prosthesis, wherein obtaining the second set of data comprises arranging (S107A) the one or more scannable members on the proximal surface by arranging each of the one or more scannable members to the implant receptacle of a respective abutment, and
   - generating (S109), based on the first set of data and the second set of data, a model of a second dental prosthesis.
Item 2. The method according to Item 1, wherein obtaining (S103) the first set of data comprises scanning (S103A) the first dental prosthesis arranged on the set of dental implants of the edentulous person.
Item 3. The method according to Item 2, wherein scanning (S103A) comprises scanning one or more of a facial surface of the first dental prosthesis, a lingual surface of the first dental prosthesis, an occlusal surface of the first surface and a jaw of the edentulous person.
Item 4. The method according to any one of the previous Items, wherein obtaining (S107) the second set of data comprises arranging (S107A) a plurality of scannable members on the proximal surface of the first dental prosthesis.
Item 5. The method according to Item 4, wherein the first dental prosthesis comprises a set of abutments for securing the first dental prostheses to the set of dental implants, each abutment of the set of abutments comprising an implant receptacle for receiving a respective dental implant of the set of dental implants, and wherein arranging (S107A) the plurality of scannable members on the proximal surface comprises arranging (S107AA) each of the plurality of scannable members to the implant receptacle of a respective abutment.
Item 6. The method according to any one of the previous Items, wherein obtaining (S107) the second set of data comprises scanning (S107B) the first dental prosthesis with the plurality of scannable members.
Item 7. The method according to Item 6, wherein scanning (S107B) comprises scanning one or more of a facial surface of the first dental prosthesis, a lingual surface of the first dental prosthesis, the proximal surface of the first dental prosthesis and the scannable members.
Item 8. The method according to any one of the previous Items, wherein generating (S109) the model comprises aligning (S109A) the first set of data with the second set of data.
Item 9. The method according to 8, wherein aligning (S109A) comprises:
   - identifying (S109AA) one or more reference areas of a facial surface and/or a lingual surface of the first dental prosthesis in the first data set and the second data set, and
   - aligning (S109AB) the one or more identified reference areas in the first data set with the one or more identified reference areas in the second data set.
Item 10. The method according to any one of the previous Items, wherein the method comprises:
   - producing (S111), based on the generated model of the second dental prosthesis, the second dental prosthesis.
Item 11. The method according to any one of the previous Items, wherein the model of the second dental prosthesis is generated using computer aided design (CAD) software.
Item 12. A scannable member for determining a position of a dental implant, the scannable member comprising a body and a base, the base being configured to mate with an implant receptacle of an abutment for fixing a dental prosthesis to a dental implant.
Item 13. The scannable member according to Item 12, wherein the base is releasably connected to the body of the scannable member.
Item 14. The scannable member according to Item 13, wherein the base is configured to clip onto the body of the scannable member.
Item 15. The scannable member according to Item 13 or 14, wherein the base comprises an insert arranged on an inside of the base, the matrix being configured to engage with the body of the scannable member.
Item 16. The scannable member according to Item 14 and 15, wherein the body of the scannable member comprises a first protrusion configured to engage with the base of the scannable member, wherein the insert is a matrix comprising a groove for receiving the first protrusion of the body.
Item 17. The scannable member according to any one of the Items 12 to 16, wherein the base has a conical shape.
Item 18. The scannable member according to any one of the Items 12 to 17, wherein the scannable member comprises a cylindrical shape.
Item 19. The scannable member according to any one of the Items 12 to 18, wherein the body of the scannable member comprises a position indicator.
Item 20. The scannable member according to Item 19, wherein the position indicator is a cut out in the body of the scannable member.
Item 21. The scannable member according to Item 19 or 20, wherein the position indicator has a beveled surface.
Item 22. The scannable member according to Item 21, wherein the beveled surface extends from a top surface of the scannable member to a lateral surface of the scannable member.
Item 23. The scannable member according to Item 19 or 20, wherein the position indicator has a surface being parallel to a longitudinal axis of the scannable member.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that Figures 1-10 may comprise features or operations which are illustrated with a solid line and some circuitries, components, features, or operations which are illustrated with a dashed line. Operations which are comprised in a solid line are features or operations which are comprised in the broadest example. Features, or operations which are comprised in a dashed line are examples which may be comprised in, or a part of, or are further features, or operations which may be taken in addition to features, or operations of the solid line examples. It should be appreciated that these operations need not be performed in order presented. Furthermore, it should be appreciated that not all of the operations need to be performed. The example operations may be performed in any order and in any combination. It should be appreciated that these operations need not be performed in the order presented. Features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the examples may be implemented at least in part by means of both hardware and software, and that several "means", "units" or "devices" may be represented by the same item of hardware.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than or equal to 10% of, within less than or equal to 5% of, within less than or equal to 1% of, within less than or equal to 0.1% of, and within less than or equal to 0.01% of the stated amount. If the stated amount is 0 (e.g., none, having no), the above recited ranges can be specific ranges, and not within a particular % of the value.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. A scannable member for determining a position of a dental implant, the scannable member comprising a body and a base, the base being configured to mate with an implant receptacle of an abutment for fixing a dental prosthesis to a dental implant.

2. The scannable member according to claim 1, wherein the base is releasably connected to the body of the scannable member.

3. The scannable member according to claim 2, wherein the base is configured to clip onto the body of the scannable member.

4. The scannable member according to claim 2 or 3, wherein the base comprises an insert arranged on an inside of the base, the matrix being configured to engage with the body of the scannable member.

5. The scannable member according to claim 3 or 4, wherein the body of the scannable member comprises a first protrusion configured to engage with the base of the scannable member, wherein the insert is a matrix comprising a groove for receiving the first protrusion of the body.

6. The scannable member according to any one of the claims 1 to 5, wherein the base has a conical shape.

7. The scannable member according to any one of the claims 1 to 6, wherein the scannable member comprises a cylindrical shape.

8. The scannable member according to any one of the claims 1 to 7, wherein the body of the scannable member comprises a position indicator.

9. The scannable member according to claim 8, wherein the position indicator is a cut out in the body of the scannable member.

10. The scannable member according to claim 8 or 9, wherein the position indicator has a beveled surface.

11. The scannable member according to claim 10, wherein the beveled surface extends from a top surface of the scannable member to a lateral surface of the scannable member.

12. The scannable member according to claim 8 or 9, wherein the position indicator has a surface being parallel to a longitudinal axis of the scannable member.
